# EUROPEAN PATENT SPECIFICATION

(11) **EP 4 521 941 B1**
(45) Date of publication and mention of the grant of the patent: **24.06.2026**
(21) Application number: 23726469.2
(22) Date of filing: 10.05.2023
(51) Int. Cl.: A22C 17/00, G01N 33/12, A23L 5/10

(54) **OVEN ARRANGEMENT AND A METHOD FOR COOKING INITIALLY UNCOOKED, WHOLE MUSCLE MEAT FOOD PRODUCTS**
OFENANORDNUNG UND VERFAHREN ZUM KOCHEN VON ANFANGS UNGEKOCHTEN, GANZMUSKELFLEISCHNAHRUNGSMITTELN
AGENCEMENT DE FOUR ET PROCÉDÉ DE CUISSON DE PRODUITS DE VIANDE DE MUSCLE, INITIALEMENT NON CUITE

(30) Priority: 13.05.2022 NL 2031847
(43) Date of publication of application: 19.03.2025
(73) Proprietor: Marel Further Processing B.V., 5831 AV Boxmeer (NL)
(72) Inventor: DUNNEWIND, Albertus, 5831 AV BOXMEER (NL); MEULENDIJKS, Johannes, Martinus, 5831 AV BOXMEER (NL)
(74) Representative: EP&C
(86) International application number: PCT/EP2023/062390
(87) International publication number: WO 2023/217843

(56) References cited:
- US-A1- 2004 022 298
- US-A1- 2011 050 872
- US-A1- 2016 286 845
- VASKOSKA ROZITA ET AL: "Evaluation of 3D Laser Scanning for Estimation of Heating-Induced Volume Shrinkage and Prediction of Cooking Loss of Pork Cuboids Compared to Manual Measurements", FOOD AND BIOPROCESS TECHNOLOGY ; AN INTERNATIONAL JOURNAL, SPRINGER-VERLAG, NEW YORK, vol. 13, no. 6, 4 May 2020 (2020-05-04), pages 938 - 947, XP037157639, ISSN: 1935-5130, [retrieved on 20200504], DOI: 10.1007/S11947-020-02421-0
- WARNER R D ET AL: "Systematic review of emerging and innovative technologies for meat tenderisation", MEAT SCIENCE, ELSEVIER SCIENCE, GB, vol. 132, 3 May 2017 (2017-05-03), pages 72 - 89, XP085131865, ISSN: 0309-1740, DOI: 10.1016/J.MEATSCI.2017.04.241
- VASKOSKA ROZITA ET AL: "Muscle, Ageing and Temperature Influence the Changes in Texture, Cooking Loss and Shrinkage of Cooked Beef", FOODS, vol. 9, no. 9, 14 September 2020 (2020-09-14), pages 1289, XP093001295, DOI: 10.3390/foods9091289
- MORA B ET AL: "Effect of different air/steam convection cooking methods on turkey breast meat:Physical characterization, water status and sensory properties", MEAT SCIENCE, ELSEVIER SCIENCE, GB, vol. 88, no. 3, 28 January 2011 (2011-01-28), pages 489 - 497, XP028369721, ISSN: 0309-1740, [retrieved on 20110206], DOI: 10.1016/J.MEATSCI.2011.01.033
- TORNBERG ET AL: "Effects of heat on meat proteins - Implications on structure and quality of meat products", MEAT SCIENCE, ELSEVIER SCIENCE, GB, vol. 70, no. 3, 1 July 2005 (2005-07-01), pages 493 - 508, XP027770679, ISSN: 0309-1740, [retrieved on 20050701]
- LEPETIT ET AL: "Collagen contribution to meat toughness: Theoretical aspects", MEAT SCIENCE, ELSEVIER SCIENCE, GB, vol. 80, no. 4, 1 December 2008 (2008-12-01), pages 960 - 967, XP025465872, ISSN: 0309-1740, [retrieved on 20080628], DOI: 10.1016/J.MEATSCI.2008.06.016

## Description

The present invention relates to an oven arrangement and a method for cooking initially uncooked, whole muscle meat food products to obtain cooked products having a minimum final core temperature.

In the food industry it is known to cook whole muscle meat products such as poultry fillets as a whole in an oven housing. Obtaining cooked products having a minimum final core temperature is paramount for food safety in the industrial food processing industry. For example, a minimum core temperature of at least 80°C is required for poultry. In practice, core temperature is measured with a needle probe in a sample of the products produced.

It is well known that the performance of an oven housing is significantly impacted by the thickness of the food product. Food product thickness can vary, e.g. on individual basis and/ or between batches. When an undercooked or otherwise under processed food product is detected as it leaves an oven housing, this is typically addressed by personnel manually adjusting process settings.

From EP2935056 a thermal processing and control system is known including a thermal processing station for receiving food products being carried on a conveyor system. A first scanning station is located upstream from the thermal processing station for scanning the food products being carried by the conveyor. The method includes modelling the thermal processing system by considering the thickness of the food products entering the food processing station. If the modelling results indicate that the measured temperatures of the food products exiting the thermal processing station are beyond a desired temperature range, that control system adjusts the thermal processing system process parameters, or recommends adjustments be made to the processing parameters of the thermal processing system.

EP2935056 discloses the use of a maximum food product thickness obtained from the scanner arrangement to control conveying speed and oven climate to obtain the cooked products.

Because improperly or underthermally processed food products present a safety risk, the controller includes a safety margin to ensure that all cooked products that are obtained have the minimum final core temperature.

In the food industry, it is common to sample cooked products. When undercooking is determined a set of products may be rejected.

The aim of the present invention is to provide an improved oven arrangement and method wherein a reduced safety margin is applied while ensuring that cooked products are obtained having a minimum final core temperature, i.e. the food products are fully cooked.

This prevents overcooked food products, dry and/ or unattractive food products and weight loss and thus effectively a loss of yield, and attributes to optimized use of the oven arrangement, e.g. resulting in a lower oven temperature and/ or reduced oven time.

This aim is achieved by an oven arrangement for cooking initially uncooked, whole muscle meat food products to obtain cooked products having a minimum final core temperature, the oven arrangement comprising:
- an oven housing having oven climate devices;
- a conveyor for receiving uncooked food products and conveying with a conveying speed the food products through the oven housing to obtain the cooked food products;
- a scanner arrangement provided upstream of the oven housing for scanning uncooked food products, configured to obtain food product thickness data of the food products;
- a controller using maximum food product thickness obtained from the scanner arrangement to control conveying speed and oven climate devices to obtain the cooked products;

characterized in that the scanner arrangement is furthermore configured to obtain fibre orientation data of the whole muscle food products;
and in that a predictor module is provided, which is adapted to be fed with both the food product thickness data and the fibre orientation data, and which is configured to predict on the basis of the fibre orientation data and food product thickness data an effective maximum food product thickness resulting from fibre denaturation taking place in an initial cooking stage within the oven;
and wherein the controller uses the effective maximum food product thickness obtained from the predictor module to control conveying speed and oven climate devices.

This aim is also chieved by a method for cooking initially uncooked, whole muscle meat food products to obtain cooked products having a final core temperature, the method comprising the steps of:
- scanning uncooked food products upstream of an oven housing to obtain food product thickness data and fibre orientation data;
- predicting on the basis of the food product thickness data and fibre orientation data an effective maximum food product thickness;
- using this effective maximum food product thickness to controlling cooking parameters such as cooking time and oven climate to obtain food products having the minimum final core temperature.

The oven arrangement and method for cooking whole muscle meat food products of the invention has an improved accuracy.

The invention is based on the insight that upon cooking whole muscle meat food products, fibre denaturation and collagen shrinkage primarily takes place in an initial cooking stage, resulting in a noticeable change of dimensions of the food product. Hence, the final cooked product shape is linked to the raw, uncooked product shape via the muscle structures having a fibre orientation.

It has been experienced that the change of shape is at a maximum at 30-40% of the denaturation process, which is at the beginning of the cooking time, generally after 15-40% of the cooking time. The food product then comprises a outer layer of denatured meat, while still most of the cooking is to be done. This change of shape depends on the fibre orientation, as in general the fibres will shrink. For a fillet, this generally results in a decreased overall length and width, and an increased height. At this stage, a preliminary stable shape, or near final product shape, of the food product is obtained, which significantly differs from the uncooked shape of the food product. In particular the height of this preliminary stable shape is larger than that of the uncooked product. In the subsequent cooking time the preliminary stable shape (near final product shape) is essentially maintained in shape, while uniform shrinkage of the food product takes place to arrive at a cooked product.

Due to the unique fibre orientations for individual products, there is no straightforward relation between the food product thickness data of the food products obtained by the scanner arrangement and the height of the food product in this preliminary stable shape. Accordingly, a controller using maximum food product thickness has to include a safety margin to compensate for this not-straightforward relation.

The invention provides a predictor module, which is adapted to be fed with both the food product thickness data and the fibre orientation data, and which is configured to predict on the basis of the fibre orientation data and food product thickness data an effective maximum food product thickness resulting from fibre denaturation taking place at the initial cooking stage.

With the insight of the impact of the fibre orientation on the effective maximum food product thickness, it was discovered further that this effective maximum food product thickness is an important factor for modelling the final core temperature. The product shape, in particular the distance for heat transport towards the core - as determined by the thickness - is important for the final core temperature. Taking the fibre orientation and the effective maximum food product thickness into account has resulted in an improved accuracy. As a result, a reduced safety margin is required while ensuring that cooked products are obtained having a minimum final core temperature.

The invention is based on the insight that the fibre orientation is to be obtained. Accordingly, food products suitable to be cooked in an oven arrangement of the invention must have a scannable fibre orientation. This is possible for raw food products, including frozen food products.

Muscle meat such as beef, pork, poultry and fish are suitable food products. It is also conceivable that bonded meat is cooked according to the inventive method and in the inventive oven arrangement: the invention is based on the insight that the fibre orientation is used to determine the effective maximum food product thickness. Hence, for food products wherein the fibre orientation can be obtained, also bonded meat products having a few zones, the invention is applicable.

In general the invention is not applicable for food products wherein the fibre orientation is not visible, such as food products having a skin or coating, or that are pre-cooked.

The oven arrangement comprises a oven housing having oven climate devices. The oven housing can comprise one or more oven zones. In embodiments, the oven housing is a so-called spiral oven, wherein a conveying path is a spiral path. Possibly, the oven arrangement comprises a double spiral. The invention is also applicable for ovens having a tunnel housing.

Advantageously, the food products are cooked with conditioned air. Preferably, the oven arrangement uses conditioned air to cook the food products. The oven climate is set by parameters of influence to conditioned air. Preferably, the conditioned air flows in an air flow through the oven housing at an air speed. In embodiments, air-conditioning means are provided for conditioning the flow of air, in particular air temperature, moisture content and dew point temperature.

Accordingly, exemplary oven climate devices are devices setting the air flow, air temperature, moisture content and dew point temperature.

The oven arrangement comprises a conveyor for receiving uncooked food products and conveying with a conveying speed the food products through the oven housing to obtain the cooked food products. The conveyor conveys along a conveying path.

It is conceivable that the conveyor extends outside the oven housing, and that the scanner arrangement scans the uncooked food products on the conveyor. In embodiments, a supply conveyor is provided adjacent the conveyor for conveying the products through the oven housing. The scanner arrangement can scan the uncooked food products on this supply conveyor.

A controller as known in the art uses maximum food product thickness obtained from the scanner arrangement to control conveying speed and oven climate to obtain the cooked products.

The controller models the core temperature of the product leaving the oven housing on the basis of the food product thickness. On the basis of this prediction of the core temperature the conveying speed and oven climate are controlled, in particular tuned, to ensure the desired minimum final core temperature is obtained for all products leaving the oven housing.

The conveying speed in practice determines the residence time of the products in the oven housing. The conveying speed thus represents a cooking time. In embodiments without a conveyor, the controller may control the cooking time.

The oven arrangement comprises a scanner arrangement provided upstream of the oven housing for scanning uncooked food products, which scanner arrangement is configured to obtain food product thickness data of the food products. The scanner arrangement of the invention is furthermore configured to obtain fibre orientation data of the whole muscle food products.

The scanner arrangement according to the present invention preferably comprises one or more laser scanners. Such laser scanners are commonly applied to determine the thickness of products.

The scanner arrangement obtains both the thickness and the fibre arrangement. It is conceivable that these data are obtained in subsequent steps, requiring the scanner to follow the food products, or a memory and labelling of the food products. If scanning takes place in subsequent steps, it is conceivable that only the fibre orientation of the thickest products is obtained.

It is conceivable that not all uncooked food products are scanned, but only a selection of food products. In particular, it is conceivable that a selection is made of relatively thick food products which are scanned, as these are potentially products having the effective maximum food product thickness.

In an advantageous embodiment the scanner arrangement is furthermore configured to obtain food product thickness data of the food products and fibre orientation data of the whole muscle food products
simultaneously.

In embodiments, the scanner arrangement comprises multiple scanners for scanning the uncooked food products.

In order to obtain fibre orientation data of the whole muscle food products the scanner arrangement includes an optical camera. It is known in the art that a pattern of the optical scattering, i.e. the spatial distribution of light reflectance on the surface of a fibrous product, recorded by the transmission or backscatter contains information on the internal structure of meat. This method visualizes the degree of fibre formation and fibre orientation. An extension of light scattering is diffusing wave spectroscopy, in which products with strong scattering can be measured. It is also conceivable that near-infrared reflectance is used to analyse the fibre orientation of raw meat.

In a preferred embodiment, the scanner arrangement includes a 3D laser scanner and an optical camera, such as a QC scanner commercially available by the applicant under the name MS2920 quality scanner. Preferably, a laser triangulation 3D scanner is applied, using a laser beam and a camera to analyse the deformation of the laser beam on object by means of trigonometric calculations.

The scanner arrangement is provided upstream of the oven housing, e.g. along an upstream end of a conveying path of the conveyor. The position upstream of the oven housing allows adequate control of the conveying speed and oven climate. In general control of the oven climate requires adjustment time, and hence, a providing the scanner in a further upstream location may be advantageous in view of adequate control of the oven parameters.

In embodiments, the scanner arrangement is furthermore configured to obtain a food product temperature prior to entering the oven housing, which is also fed to the predictor module to predict the effective maximum food product thickness. In addition or alternatively, the scanner arrangement is configured to obtain further food product data such as heating history (frying, cooking) and (salt) treatment, which are fed to the predictor module to predict the effective maximum food product thickness.

According to the invention a predictor module is provided, which is adapted to be fed with both the food product thickness data and the fibre orientation data, and which is configured to predict on the basis of the fibre orientation data and food product thickness data an effective maximum food product thickness resulting from fibre denaturation taking place in an initial cooking stage within the oven.

With this effective maximum food product thickness the controller is able to model the minimum final core temperature and hence to control the conveying speed and oven climate devices to obtain cooked products having a minimum final core temperature.

In practice, the calculation capacity of controller and predictor module can be integrated.

In embodiments, the predictor module only predicts the effective maximum food product thickness for the thickest food products. It is conceivable that the prediction of effective maximum food product thickness is only calculated for the thickest food products, i.e. the fibre orientation is obtained for all products, but is only used to predict the effective maximum food product thickness for a selection of the products. This is advantageous in view of calculation capacity.

The predictor module can comprise a database and/ or algorithm to predict the effective maximum food product thickness.

Advantageously, the predictor module is product specific in that a different module is used for different food product types such as poultry breast fillets, poultry legs, fish fillets, pork tenderloins, beefsteak etc. etc. Hence, not only the animal from which the meat originates is taken into account, but also the type of meat. In embodiments, it is also conceivable that the slaughtering process used to obtain the whole muscle meat is taken into account.

In embodiments, the scanner arrangement according to the present invention also comprises a (digital) optical recognition device which captures a series of images for the purpose of food product recognition. The obtained data can be used to (automatically) provide the predictor module specific for the type of food product.

In embodiments, the predictor module also takes into account oven climate set points, for example temperature and/or dew point. The effective maximum food product thickness is more accurately determined when the oven climate is taken into account. It has been observed that the dewpoint has a significant effect on the total change in shape and the rate at which meat, in particular chicken fillets, increase in height, i.e. increase in thickness, and reduce inn length and width. The higher the dewpoint the faster and the more a chicken fillet changes shape.

The invention is further elucidated in relation to the drawings, in which:
Fig. 1 is a picture from above of an uncooked, whole muscle meat poultry fillet in which fibre orientation is schematically depicted;
Fig. 2 is a graph representing the relationship between height change and heating time for chicken fillets;
Fig. 3 is a graph representing the relationship between weight change and heating time for chicken fillets;
Fig. 4 is a graph representing the relationship between length change and heating time for chicken fillets;
Fig. 5 is a graph representing the relationship between width change and heating time for chicken fillets;
Fig. 6 schematically represents the height change of two distinct fillets.

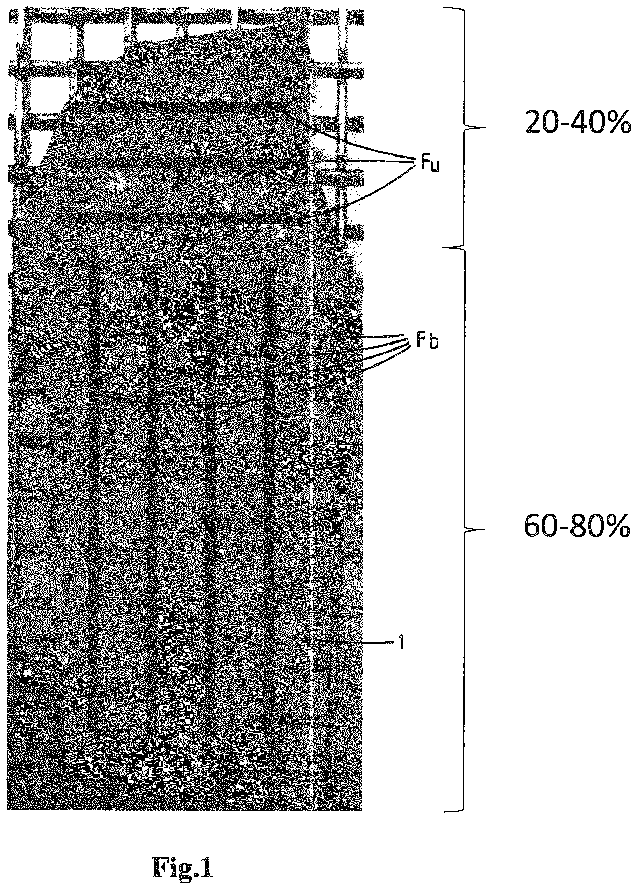

In fig. 1 an uncooked, whole muscle meat poultry fillet 1 is show from a top view. At the upper part of the depicted fillet the fibre orientation is generally extending over the width of the fillet, as represented by lines Fu. The fibre orientation at the bottom part of the depicted fillet generally extends over the length direction of the fillet, as represented by lines Fb.

This is a very crude generalization of a poultry fillet. The depicted fibre orientations Fu and Fb are oversimplified representations of the fibres. However, in view of the (historical) functions of the muscles to be able to fly, the muscles and fibres in the upper part of the fillet do extend generally over the width of the fillet, while the fibres in the bottom part extend over the length.

What is referred to above as "the" upper part having a fibre orientation Fu, in practice varies between 20-40% of the entire length of the fillet. "The" bottom part having a fibre orientation Fb in practice varies between 60-80% of the length of the fillet.

The thickest part of the fillet is at the upper part. This part shrinks of the width, and consequently bulges in the height direction, causing an increased food product thickness.

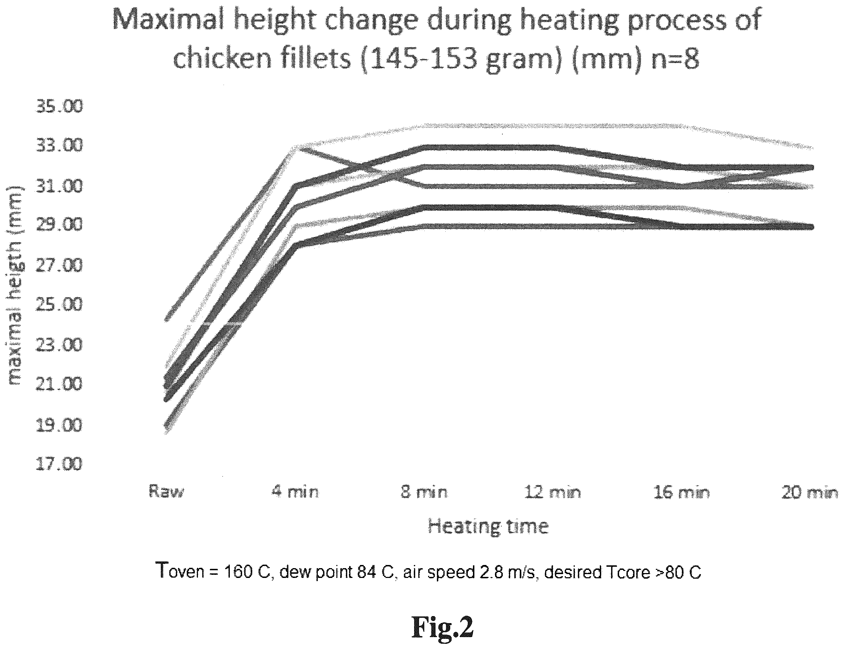

This follows from the data shown in figs. 2-5, showing graphs representing the relationship between respectively the height, weight, length and width change and the heating time for a number of chicken fillets. The experimental conditions are the same: the fillets were cooked in an oven housing having a temperature of 160°C, a dew point of 84°C and an air speed of 2,8 m/s. The minimum final core temperature of the fillets 80°C. This minimum final core temperature is arrived after about 20 minutes of cooking in the oven housing. The data are obtained for a number of eight fillets, having an uncooked weight of 145-153 grams.

From fig. 2 follows that the height, i.e. the food product thickness, significantly increases during the initial cooking time, almost 50% from ~22 mm to ~30mm. This height increase takes place at the beginning of the cooking time. Most of the height increase takes place in the first 4-5 minutes of the overall cooking time of 20 minutes. Hereafter the height does not change much. Some shrinkage takes place, but the order of magnitude hereof is only 1-2 millimetres, i.e. in the order of 10%.

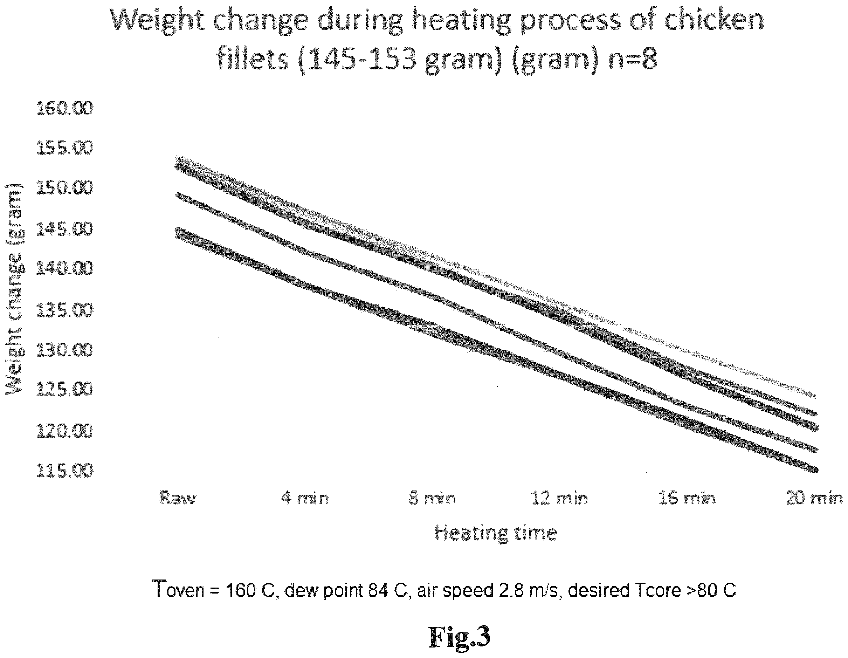

From fig. 3 follows that the weight of a chicken fillet decreases during cooking. This is an essentially linear decrease. This demonstrates that the initial change of shape during cooking is caused by fibre orientation and not by a loss of water of the fillets.

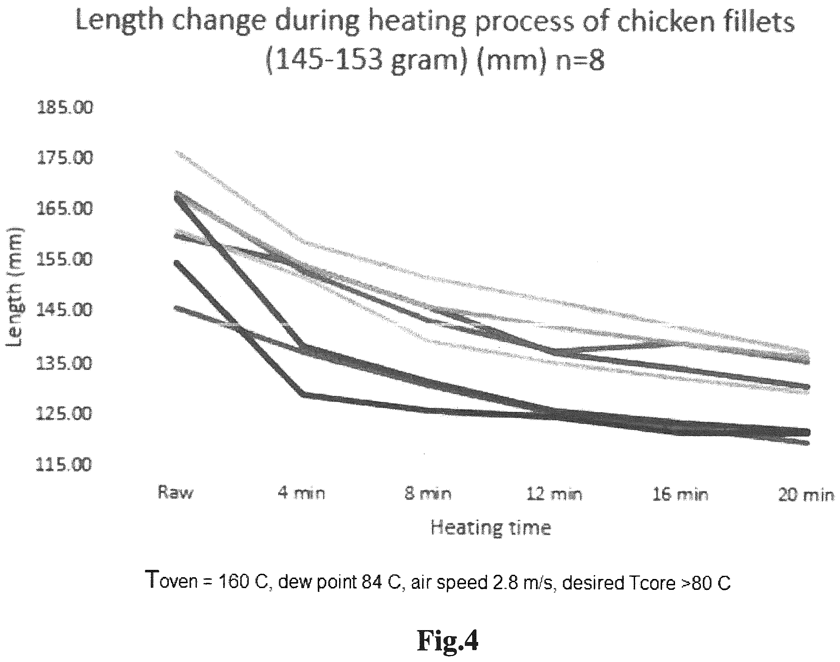

From fig. 4 follows that the length of a chicken fillet decreases during cooking. On average, most of the length decrease takes place at the beginning of the cooking time, in the initial 4-5 minutes of the overall cooking time of 20 minutes. Hereafter the length still decreases. The results from this sample of eight fillets does show a trend.

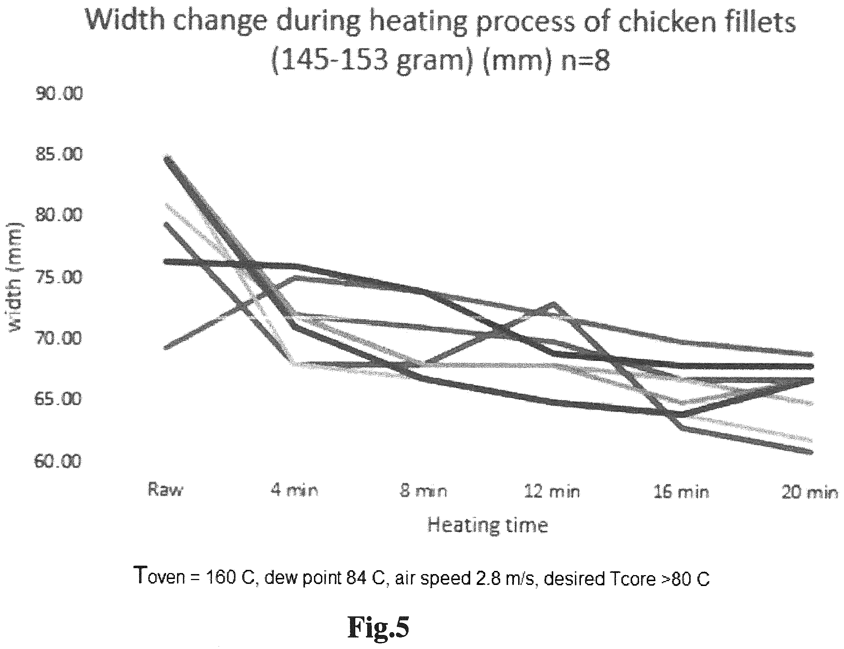

From fig. 5 follows that the width of a chicken fillet decreases during cooking. The results from this sample of eight fillets does show a trend.

The shrinkage behaviour of the fillets over the length and width of the fillets is clearly less uniform than the change in thickness.

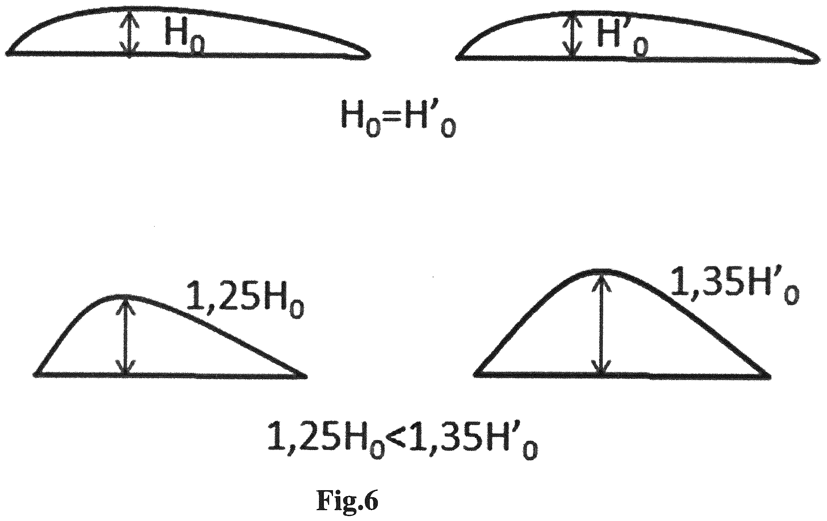

In the upper part of fig. 6 two exemplary uncooked chicken fillets are shown, having the same food product thickness of HO and H'0. In a prior art oven arrangement, the scanner obtains the same food product thickness data H0 and H'0 for both fillets. In the prior art, this same height is fed to the controller which will control conveying speed and oven climate in the same way for both fillets, as the data from the scanner are the same.

In the lower part of fig. 6 the impact of the fibre orientation is schematically shown. The left-hand fillet bulges different from the right-hand fillet. In particular, it is visible that the left-hand fillet has a lower effective maximum food product thickness than the right-hand fillet. According to the invention, these distinct effective maximum food product thicknesses are fed to the controller. The controller uses the maximum effective food product thickness, thus 1,35H'0 to control conveying speed and oven climate devices.

## Claims

1. Oven arrangement for cooking initially uncooked, whole muscle meat food products (1) to obtain cooked products having a minimum final core temperature, the oven arrangement comprising:
- an oven housing having oven climate devices;
- conveyor for receiving uncooked food products and conveying with a conveying speed the food products through the oven housing to obtain the cooked food products;
- a scanner arrangement provided upstream of the oven housing for scanning uncooked food products, configured to obtain food product thickness data of the food products;
- a controller using maximum food product thickness obtained from the scanner arrangement to control conveying speed and oven climate devices to obtain the cooked products;
**characterized in that** the scanner arrangement is furthermore configured to obtain fibre orientation data of the whole muscle food products;
and **in that** a predictor module is provided, which is adapted to be fed with both the food product thickness data and the fibre orientation data, and which is configured to predict on the basis of the fibre orientation data and food product thickness data an effective maximum food product thickness resulting from fibre denaturation taking place in an initial cooking stage within the oven;
and wherein the controller uses the effective maximum food product thickness obtained from the predictor module to control conveying speed and oven climate devices.

2. Oven arrangement according to claim 1, wherein the scanner arrangement is furthermore configured to obtain food product thickness data of the food products and fibre orientation data of the whole muscle food products simultaneously.

3. Oven arrangement according to any of the preceding claims, wherein the scanner arrangement includes a 3D laser scanner and an optical camera, and wherein laser triangulation is applied to obtain the fibre orientation data.

4. Oven arrangement according to any of the preceding claims, wherein the scanner arrangement is furthermore configured to obtain a food product temperature prior to entering the oven housing, which is also fed to the predictor module to predict the effective maximum food product thickness.

5. Oven arrangement according to any of the preceding claims, wherein the predictor module only predicts the effective maximum food product thickness for the thickest food products.

6. Oven arrangement according to any of the preceding claims, wherein the predictor module also takes into account oven climate set points, for example temperature and/or dew point.

7. Oven arrangement according to any of the preceding claims, wherein the oven climate devices that are controlled are able to control air flow, air temperature, moisture content and/or dew point temperature.

8. Oven arrangement according to any of the preceding claims, wherein the scanner arrangement scans the uncooked food products on the conveyor.

9. Method for cooking initially uncooked, whole muscle meat food products to obtain cooked products having a minimum final core temperature wherein preferably use is made of an oven arrangement according to any of the preceding claims 1-8, the method comprising the steps of:
- scanning uncooked food products upstream of an oven housing to obtain food product thickness data and fibre orientation data
- predicting on the basis of the food product thickness data and fibre orientation data an effective maximum food product thickness,
- using this effective maximum food product thickness to controlling cooking parameters such as cooking time and oven climate to obtain food products having the minimum final core temperature.

10. Method according to claim 9, wherein use is made of an oven arrangement comprising an oven housing having oven climate devices;
- a conveyor for receiving uncooked food products and conveying with a conveying speed the food products through the oven housing to obtain the cooked food products;
- a scanner arrangement provided upstream of the oven housing for scanning uncooked food products, configured to obtain food product thickness data of the food products and furthermore configured to obtain fibre orientation data of the whole muscle food products;
- a predictor module, which is adapted to be fed with both the food product thickness data and the fibre orientation data, and which is configured to predict on the basis of the fibre orientation data and food product thickness data an effective maximum food product thickness resulting from fibre denaturation taking place in an initial cooking stage within the oven;
- a controller using the effective maximum food product thickness obtained from the predictor module to control conveying speed and oven climate devices to obtain the cooked products;
the method comprising the steps of:
- scanning uncooked food products upstream of the oven housing to obtain food product thickness data and fibre orientation data and feeding these data to the predictor module;
- predicting on the basis of the food product thickness data and fibre orientation data an effective maximum food product thickness;
- the controller, using this effective maximum food product thickness, controlling the conveying speed and oven climate to obtain food products having the final core temperature;
- conveying the food products through the oven housing.

## Patentansprüche

1. Ofenanordnung zum Garen von anfänglich ungegarten Vollmuskelfleischlebensmittelprodukten (1), um gegarte Produkte mit einer minimalen Endkerntemperatur zu erhalten, wobei die Ofenanordnung Folgendes umfasst:
- ein Ofengehäuse mit Ofenklimageräten;
- einen Förderer zum Aufnehmen von ungegarten Lebensmittelprodukten und Fördern der Lebensmittelprodukte durch das Ofengehäuse mit einer Fördergeschwindigkeit, um die gegarten Lebensmittelprodukte zu erhalten;
- eine Abtasteranordnung, die stromaufwärts des Ofengehäuses zum Abtasten ungegarter Lebensmittelprodukte bereitgestellt ist, die dazu ausgelegt ist, Lebensmittelproduktdickendaten der Lebensmittelprodukte zu erhalten;
- eine Steuerung, die eine von der Abtasteranordnung erhaltene maximale Lebensmittelproduktdicke verwendet, um die Fördergeschwindigkeit und die Ofenklimageräte zu steuern, um die gegarten Produkte zu erhalten;
**dadurch gekennzeichnet, dass** die Abtasteranordnung ferner dazu ausgelegt ist, Faserausrichtungsdaten der Vollmuskellebensmittelprodukte zu erhalten;
und dadurch, dass ein Vorhersagemodul bereitgestellt ist, das dazu eingerichtet ist, sowohl mit den Lebensmittelproduktdickendaten als auch den Faserausrichtungsdaten gespeist zu werden, und das dazu ausgelegt ist, basierend auf den Faserausrichtungsdaten und den Lebensmittelproduktdickendaten eine effektive maximale Lebensmittelproduktdicke vorherzusagen, die sich aus einer Faserdenaturierung ergibt, die in einer anfänglichen Garstufe innerhalb des Ofens stattfindet;
und wobei die Steuerung die von dem Vorhersagemodul erhaltene effektive maximale Lebensmittelproduktdicke verwendet, um die Fördergeschwindigkeit und Ofenklimageräte zu steuern.

2. Ofenanordnung nach Anspruch 1, wobei die Abtasteranordnung ferner dazu ausgelegt ist, Lebensmittelproduktdickendaten der Lebensmittelprodukte und Faserausrichtungsdaten der Vollmuskellebensmittelprodukte gleichzeitig zu erhalten.

3. Ofenanordnung nach einem der vorhergehenden Ansprüche, wobei die Abtasteranordnung einen 3D-Laserabtaster und eine optische Kamera umfasst, und wobei eine Lasertriangulation angewendet wird, um die Faserausrichtungsdaten zu erhalten.

4. Ofenanordnung nach einem der vorhergehenden Ansprüche, wobei die Abtasteranordnung ferner dazu ausgelegt ist, eine Lebensmittelprodukttemperatur vor Eintritt in das Ofengehäuse zu erhalten, die auch in das Vorhersagemodul eingespeist wird, um die effektive maximale Lebensmittelproduktdicke vorherzusagen.

5. Ofenanordnung nach einem der vorhergehenden Ansprüche, wobei das Vorhersagemodul nur die effektive maximale Lebensmittelproduktdicke für die dicksten Lebensmittelprodukte vorhersagt.

6. Ofenanordnung nach einem der vorhergehenden Ansprüche, wobei das Vorhersagemodul auch Ofenklimasollwerte, beispielsweise Temperatur und/oder Taupunkt, berücksichtigt.

7. Ofenanordnung nach einem der vorhergehenden Ansprüche, wobei die gesteuerten Ofenklimageräte in der Lage sind, einen Luftstrom, eine Lufttemperatur, einen Feuchtigkeitsgehalt und/oder eine Taupunkttemperatur zu steuern.

8. Ofenanordnung nach einem der vorhergehenden Ansprüche, wobei die Abtasteranordnung die ungegarten Lebensmittelprodukte auf dem Förderer abtastet.

9. Verfahren zum Garen anfänglich ungegarter Vollmuskelfleischlebensmittelprodukte, um gegarte Produkte mit einer minimalen Endkerntemperatur zu erhalten, wobei vorzugsweise eine Ofenanordnung nach einem der vorhergehenden Ansprüche 1-8 verwendet wird, wobei das Verfahren die folgenden Schritte umfasst:
- Abtasten ungegarter Lebensmittelprodukte stromaufwärts eines Ofengehäuses, um Lebensmittelproduktdickendaten und Faserausrichtungsdaten zu erhalten
- Vorhersagen einer effektiven maximalen Lebensmittelproduktdicke basierend auf den Lebensmittelproduktdickendaten und den Faserausrichtungsdaten,
- Verwenden der effektiven maximalen Lebensmittelproduktdicke zum Steuern von Garparametern wie Garzeit und Ofenklima, um Lebensmittelprodukte mit der minimalen Endkerntemperatur zu erhalten.

10. Verfahren nach Anspruch 9, wobei eine Ofenanordnung verwendet wird, umfassend ein Ofengehäuse mit Ofenklimageräten;
- einen Förderer zum Aufnehmen von ungegarten Lebensmittelprodukten und Fördern der Lebensmittelprodukte durch das Ofengehäuse mit einer Fördergeschwindigkeit, um die gegarten Lebensmittelprodukte zu erhalten;
- eine Abtasteranordnung, die stromaufwärts des Ofengehäuses zum Abtasten ungegarter Lebensmittelprodukte bereitgestellt ist, die dazu ausgelegt ist, Lebensmittelproduktdickendaten der Lebensmittelprodukte zu erhalten, und ferner dazu ausgelegt ist, Faserausrichtungsdaten der Vollmuskellebensmittelprodukte zu erhalten;
- ein Vorhersagemodul, das dazu eingerichtet ist, sowohl mit den Lebensmittelproduktdickendaten als auch den Faserausrichtungsdaten gespeist zu werden, und das dazu ausgelegt ist, basierend auf den Faserausrichtungsdaten und den Lebensmittelproduktdickendaten eine effektive maximale Lebensmittelproduktdicke vorherzusagen, die sich aus einer Faserdenaturierung ergibt, die in einer anfänglichen Garstufe innerhalb des Ofens stattfindet;
- eine Steuerung, die die von dem Vorhersagemodul erhaltene effektive maximale Lebensmittelproduktdicke verwendet, um die Fördergeschwindigkeit und die Ofenklimageräte zu steuern, um die gegarten Produkte zu erhalten;
wobei das Verfahren die folgenden Schritte umfasst:
- Abtasten ungegarter Lebensmittelprodukte stromaufwärts des Ofengehäuses, um Lebensmittelproduktdickendaten und Faserausrichtungsdaten zu erhalten, und Einspeisen dieser Daten in das Vorhersagemodul;
- Vorhersagen einer effektiven maximalen Lebensmittelproduktdicke basierend auf den Lebensmittelproduktdickendaten und den Faserausrichtungsdaten;
- Steuern der Fördergeschwindigkeit und des Ofenklimas durch die Steuerung unter Verwendung der effektiven maximalen Lebensmittelproduktdicke, um Lebensmittelprodukte mit der Endkerntemperatur zu erhalten;
- Fördern der Lebensmittelprodukte durch das Ofengehäuse.

## Revendications

1. Agencement de four pour cuire des produits alimentaires (1) à base de viande musculaire entière initialement non cuits afin d'obtenir des produits cuits ayant une température à cœur finale minimale, l'agencement de four comprenant :
- une enceinte de four comportant des dispositifs climatiques de four ;
- un convoyeur pour recevoir des produits alimentaires non cuits et acheminer, avec une vitesse d'acheminement, les produits alimentaires à travers l'enceinte du four pour obtenir les produits alimentaires cuits ;
- un agencement de scanner prévu en amont de l'enceinte du four pour scanner des produits alimentaires non cuits, configuré pour obtenir des données d'épaisseur de produits alimentaires des produits alimentaires ;
- un moyen de commande utilisant l'épaisseur maximale des produits alimentaires obtenue à partir de l'agencement de scanner pour commander la vitesse de transport et les dispositifs climatiques de four pour obtenir les produits cuits ;
**caractérisé en ce que** l'agencement de scanner est en outre configuré pour obtenir des données d'orientation des fibres de l'ensemble des produits alimentaires à base de muscle entier ;
et **en ce qu'**un module prédicteur est prévu, qui est conçu pour être alimenté à la fois avec les données d'épaisseur du produit alimentaire et les données d'orientation des fibres, et qui est configuré pour prédire, d'après les données d'orientation des fibres et les données d'épaisseur du produit alimentaire, une épaisseur maximale effective du produit alimentaire résultant de la dénaturation des fibres ayant lieu lors d'une étape de cuisson initiale à l'intérieur du four ;
et dans lequel le moyen de commande utilise l'épaisseur maximale effective de produit alimentaire obtenue à partir du module prédicteur pour commander la vitesse de transport et les dispositifs climatiques de four.

2. Agencement de four selon la revendication 1, l'agencement de scanner étant en outre configuré pour obtenir simultanément des données d'épaisseur de produit alimentaire des produits alimentaires et des données d'orientation des fibres des produits alimentaires à base de muscle entier.

3. Agencement de four selon l'une quelconque des revendications précédentes, l'agencement de scanner comprenant un scanner laser 3D et une caméra optique, et une triangulation laser étant appliquée pour obtenir les données d'orientation de fibre.

4. Agencement de four selon l'une quelconque des revendications précédentes, l'agencement de scanner étant en outre configuré pour obtenir une température de produit alimentaire avant l'entrée dans l'enceinte du four, qui est également fournie au module prédicteur pour prédire l'épaisseur maximale effective du produit alimentaire.

5. Agencement de four selon l'une quelconque des revendications précédentes, le module prédicteur ne prédisant l'épaisseur maximale effective du produit alimentaire que pour les produits alimentaires les plus épais.

6. Agencement de four selon l'une quelconque des revendications précédentes, le module prédicteur tenant également compte de points de consigne climatiques du four, par exemple la température et/ou le point de rosée.

7. Agencement de four selon l'une quelconque des revendications précédentes, les dispositifs climatiques de four qui sont commandés étant capables de commander le débit d'air, la température de l'air, la teneur en humidité et/ou la température du point de rosée.

8. Agencement de four selon l'une quelconque des revendications précédentes, l'agencement de scanner balayant les produits alimentaires non cuits sur le convoyeur.

9. Procédé de cuisson de produits alimentaires à base de viande musculaire entière initialement non cuits pour obtenir des produits cuits ayant une température à coeur finale minimale, dans lequel il est de préférence fait usage d'un agencement de four selon l'une quelconque des revendications 1 à 8 qui précèdent, le procédé comprenant les étapes de :
- balayage de produits alimentaires non cuits en amont de l'enceinte du four pour obtenir des données d'épaisseur des produits alimentaires et des données d'orientation des fibres
- prédiction, d'après les données d'épaisseur des produits alimentaires et les données d'orientation des fibres, d'une épaisseur maximale effective des produits alimentaires,
- utilisation de cette épaisseur maximale effective de produit alimentaire pour commander des paramètres de cuisson tels que le temps de cuisson et le climat du four afin d'obtenir des produits alimentaires ayant la température à cœur finale minimale.

10. Procédé selon la revendication 9, dans lequel il est fait usage d'un agencement de four comprenant une enceinte de four dotée de dispositifs climatiques de four ;
- un convoyeur pour recevoir des produits alimentaires non cuits et acheminer, avec une vitesse d'acheminement, les produits alimentaires à travers l'enceinte du four pour obtenir les produits alimentaires cuits ;
- un agencement de scanner prévu en amont de l'enceinte du four pour balayer des produits alimentaires non cuits, configuré pour obtenir des données d'épaisseur de produits alimentaires des produits alimentaires et en outre configuré pour obtenir des données d'orientation des fibres des produits alimentaires à base de muscle entier ;
- un module prédicteur, qui est adapté pour être alimenté à la fois avec les données d'épaisseur du produit alimentaire et les données d'orientation des fibres, et qui est configuré pour prédire, d'après les données d'orientation des fibres et des données d'épaisseur du produit alimentaire, une épaisseur maximale effective du produit alimentaire résultant de la dénaturation des fibres ayant lieu lors d'une étape de cuisson initiale à l'intérieur du four ;
- un moyen de commande utilisant l'épaisseur maximale effective du produit alimentaire obtenue à partir du module prédicteur pour commander la vitesse de convoyage et les dispositifs climatiques du four pour obtenir les produits cuits ;
le procédé comprenant les étapes de :
- balayage de produits alimentaires non cuits en amont de l'enceinte du four pour obtenir des données d'épaisseur des produits alimentaires et des données d'orientation des fibres et transmission de ces données au module prédicteur ;
- prédiction, d'après les données d'épaisseur des produits alimentaires et les données d'orientation des fibres, d'une épaisseur maximale effective des produits alimentaires ;
- commande, par le moyen de commande en utilisant cette épaisseur maximale effective de produit alimentaire, de la vitesse de transport et du climat du four pour obtenir des produits alimentaires ayant la température à cœur finale ;
- acheminement des produits alimentaires à travers l'enceinte du four.
